# EUROPEAN PATENT SPECIFICATION

(11) **EP 1 531 241 B1**
(45) Date of publication and mention of the grant of the patent: **28.05.2008**
(21) Application number: 04077641.1
(22) Date of filing: 24.09.2004
(51) Int. Cl.: F01N 3/022, F01N 3/031, F01N 3/033, F01N 9/00

(54) **Filtering device at a controlled temperature**
Temperaturgeregelte Filtervorrichtung
Dispositif de filtrage à température contrôlée

(30) Priority: 12.11.2003 IT MI20032183
(43) Date of publication of application: 18.05.2005
(73) Proprietor: Colamussi, Arturo, I-44100 Ferrara (IT)
(72) Inventor: Colamussi, Arturo, I-44100 Ferrara (IT)
(74) Representative: De Gregori, Antonella

(56) References cited:
- EP-A- 0 559 907
- DE-A1- 10 137 050
- US-A- 4 363 753
- US-A- 4 685 291
- US-A- 5 458 673
- US-B1- 6 178 744

## Description

The present invention relates to a filtering device at a controlled temperature.

More precisely, the invention relates to a filtering device wherein the filtering element consists of microporous paper, having a high volume surface for filtering and retaining the particulate and volatile substances present in the exhaust gases of internal combustion engines, such as Diesel cycle engines.

The general problem of environmental pollution is based on the presence of substances emitted into the atmosphere mainly as a result of human activities (industrial energy production, motor vehicle exhausts, heating systems, ...).

Among polluting substances, those discharged by internal combustion engines, in particular Diesel cycle engines, are particularly important.

These substances can include: the particulate of uncombusted carbon particulate and volatile organic substances (VOS) such as unburned hydrocarbons, aldehydes, aromatic polycyclic hydrocarbons (APH).

The above polluting substances are the origin of discomfort and also serious pathologies, it should be remembered that heavy APHs have proved to be carcinogenic.

Pollution phenomena are aggravated by atmospheric conditions, traffic increase in urban areas, and an increase in the number of vehicles with Diesel engines.

Various solutions have been proposed for providing a remedy a situation of pollution getting continuously worse, are various and operate according to different principles.

Among the filtering systems proposed, there are those called self-regenerating systems, for example a filter mainly consisting of a device comprising a section containing a catalyst which generates nitrogen dioxide (NO₂), followed by a section consisting of a filter, generally ceramic, capable of retaining the particulate, is well known.

When this filter reaches a temperature of 250°C - 350°C, the NO₂ triggers the combustion of the carbon particles trapped in the filter, thus preventing its progressive obstruction.

This device however has various limitations:
- due to the operating temperatures, the filter is not capable of withholding the volatile organic substances;
- the gas oil must not contain sulfur, otherwise the catalyst is poisoned;
- the functioning of the device is linked to the exhaust gas temperature;
- the combustion ashes of the lubricating oil cannot be eliminated from the particulate filter, which consequently becomes progressively obstructed;
- the production of NO₂ can represent a danger for the environment;
- it is not easy to verify the efficacy of the system over a period of time.

The significant production and installation costs should be added to the above drawbacks.

Similar limitations also refer to intermittent regeneration filters by the injection of liquid catalyst, when there is a blockage signal of the particulate filter.

These solutions do not restrain the volatile organic substances.

US 4685291 A, discloses a particulate trap system used with a diesel engine having an exhaust conduit ducting exhaust materials through an exhaust cooler, then through a particulate trap, and then to the atmosphere. A by-pass conduit is connected in parallel with the exhaust cooler, and valves are located in the exhaust conduit and the by-pass conduit. A microprocessor-based control unit is arranged to allow normal operation with the exhaust materials passing through the cooler. When backpressure in the exhaust conduit reaches a predetermined level due to particulate build-up in the trap, the valves are gradually reversed, so that non-cooled exhaust materials arrive at the trap, thus regenerating it due to combustion.

The Applicant has surprisingly found that it is possible to reach a very high filtration efficiency by means of a device comprising a microporous paper filter suitable for retaining the particulate and for absorbing the volatile organic substances present in the exhaust gas of internal combustion engines, and a controlled heat exchanger suitable for regulating the temperature of the gas at the filter inlet.

The main objective of the present invention is therefore to produce a filtering device at a controlled temperature for particulates and volatile organic substances, having a wide volume surface which is particularly efficient for filtering and also relatively long-lasting.

Another objective of the present invention is to provide a filtering device at a controlled temperature with particularly reduced dimensions, equipped with a filter which is economical to produce and with simple installation and substitution.

A further objective of the present invention is to provide a filtering device at a controlled temperature, equipped with a microporous paper filter suitably selected so as to retain the particulate and the volatile organic substances present in the exhaust gas of internal combustion engines, in particular Diesel cycle engines, with particulate having dimensions lower than 0.1 microns.

Another objective of the present invention is to provide a filtering device which can operate at different temperatures to obtain different filtering effects.

Another objective of the present invention is to provide a filter which does not have an appreciable pressure drop for the gases passing through it and which consequently does not cause significant counter-pressures in the exhaust.

These and other objectives according to the present invention are achieved by a filtering device at a controlled temperature, according to what is explained in claim 1.

Further characteristics of the invention form the object of the dependent claims.

A filtering device for the particulate and volatile substances present in the exhaust gas of internal combustion engines, comprises a conveying duct which receives the gases from the exhaust of a motor vehicle, a filter connected to the conveying duct and a heat exchanger positioned and connected so as to receive the discharge gases from the conveying duct and send them to the filter, a control valve suitable for regulating the temperature of the exhaust gas entering the filter, by deviating an aliquot of the stream of the discharge gas coming from the exhaust of the vehicle, to send it to the heat exchanger.

The characteristics and advantages of a microporous paper filter for particulate according to the present invention will appear more evident from the following illustrative but non-limiting description, referring to the enclosed schematic drawings, in which:
figure 1a is a schematic view of the filtering device according to the invention;
figure 1b is a schematic view of the filtering device according to a different embodiment of the invention;
figures 2a and 2b are perspective views of the filter incorporated in the device according to the invention;
figure 3 is a schematic side view of a detail of the filter of figures 2a and 2b;
figures 4a-4c are views of details of the filter of the device according to the invention;
figure 5 is a schematic front view of the filter of figure 2a;
figure 6 is a schematic front view of the filter of figure 5 housed inside a container.

A filtering device 1 for the particulate and volatile substances present in the discharge gases of internal combustion engines, receives gas from the motor vehicle exhaust through a conveying duct, in generic terms indicated with 2.

The filtering device 1 comprises a filter 10 connected to the conveying duct 2 and inserted inside a container 30 equipped with an inlet duct 31 and a discharge duct 32.

The device 10 also comprises a heat exchanger 3 positioned and connected so as to receive the discharge gases from the conveying duct 2 and send them to the filter 10.

Said heat exchanger can have any form technologically suitable for the purpose, but is preferably proposed as an air-gas exchanger, due to the fact that this type of heat exchanger can be produced and used economically and with great simplicity.

The conveying duct 2 preferably branches out into a first branch 2' connected to the filter 10 and a second branch 2" connected to the heat exchanger 3.

The heat exchanger 3 also has, at the outlet, a duct of cooled gases 8 directly connected to the first branch 2', to send the cooled gases to the main stream destined for the filter 10, in order to obtain a previous mixing thereof.

The deviation of the gases to be cooled from the main stream called F1, is effected by means of a control valve 4, situated close to the branching area of the branches 2' and 2" from the conveying duct 2.

This control valve 4 has a motor 7 which is controlled by means of a control device 5.

The control device 5 is equipped with a temperature sensor 6 inserted into the first branch 2' near the inlet 31 to the filter 10.

In this way an automated regulation can be effected and defined by the user, according to the temperatures of the gases to be filtered.

The control device 5 is, in fact, capable of automatically regulating the temperature of the discharge gas entering the filter 10, by deviating an aliquot of the discharge gas flow coming from the exhaust of the motor vehicle, and sending it to the heat exchanger 3.

According to the heat exchange effected (external/internal temperature efficiency, amount of gas sent to the heat exchanger) the temperature sensor will send an input which will allow the control device 4 to adjust, substantially at any instant, the regulation of the control valve.

This functioning method is particularly advantageous as the Applicant has surprisingly found that, by maintaining the temperature of the gas at the filter 10 inlet at a value of around 110°C-120°C, the filter not only retains 99% of the carbonaceous particulate, but also retains the so-called Volatile Organic Substances (VOS) such as unburned hydrocarbons, aldehydes, aromatic polycyclic hydrocarbons (APH) and the like, which greatly contribute to atmospheric pollution.

This effect can be increased by using a large filtering surface of about 0.2 m²/kw, that allows the use of a large-dimensioned absorbing bed, which retains the above volatile substances, mainly in the form of an aerosol.

This cannot be found in any other type of filter, in which the regeneration and necessity of maintaining high temperatures, prevent the phenomenon from occurring.

If, on the contrary, it is observed that the environmental pollution in the circulation area can be prevalently attributed to the particulate, a higher operating temperature of the filter can be defined.

The same filter can function at temperatures of around 170-180°C: in this case the vaporized VOS are not withheld and the duration of the filter whose only function is to purify the carbonaceous particles, is much greater.

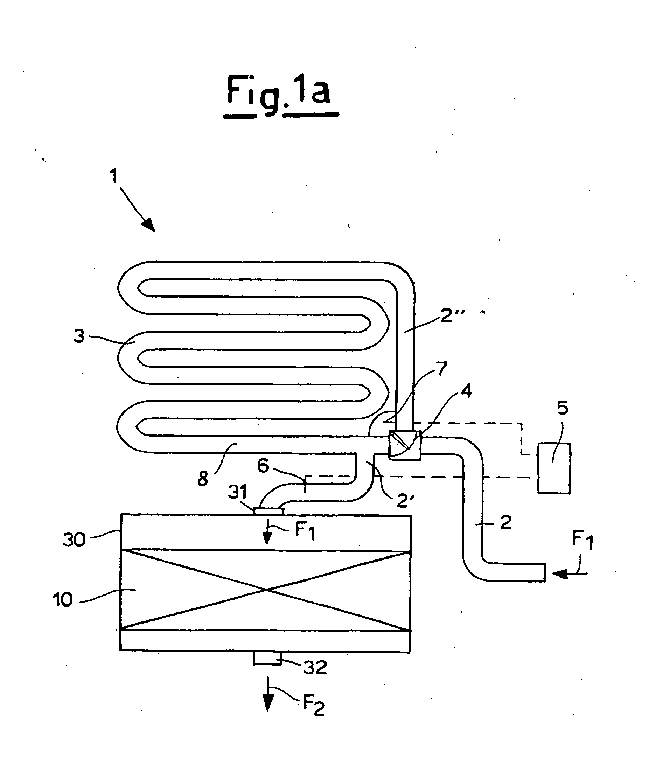

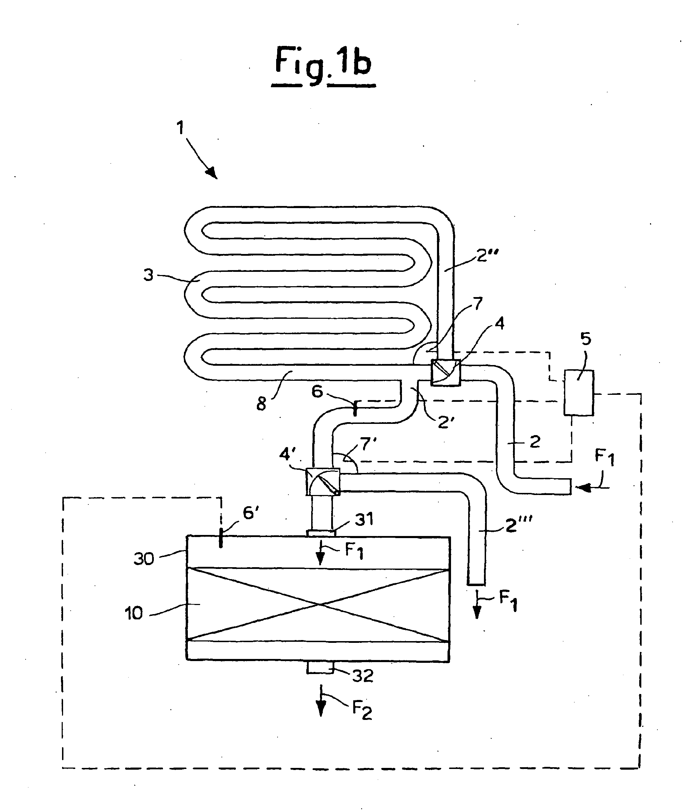

With reference to figure 1b, this illustrates a device according to a different embodiment of the invention.

In this embodiment, the device has the structure previously schematized and, in addition, a third branch of duct 2"' which sends the gases directly to be discharged, branches off from the duct 2' carrying the main flow identified by F1 to the filter.

The interception of the gases F1 to be discharged without their filtration, is effected by means of a controlled interception valve 4'.

Said valve 4' is situated close to the branching area of the third duct branch 2"' from the first duct branch 2'.

The controlled valve 4' is activated by means of a motorization 7' and driven by means of the control device 5 or other control device assigned thereto.

The filtration device, according to its embodiments, can also have at least one pressure sensor 6' connected to the control device 5, and inserted at the inlet of the filter 10 inside its container or upstream of the filter 10 in the inlet duct 31.

In this way, it is possible to check the counterpressure to detect any possible blockages of the filter 10, and activate corrective devices, such as its exclusion for maintenance, by manually or automatically diverting the passage of gas through the filter.

The control device 5 is, in fact, capable of automatically intercepting the valve 4' so as to divert the gases F1 directly for discharge in the case of an excessive counterpressure.

The most effective functioning procedure of the filter, in terms of filtered particulate and vapours, is obtained within a temperature range of 90°C to 130°C and more specifically from 100°C to 120°C.

For temperatures below 90°C - 100°C, it is possible to exclude the exchanger by means of the valve 4, whereas for temperatures higher than 120°C - 130°C, it is possible to exclude the filter and exchanger by acting on both valves 4, 4' or, as already mentioned, adopt the filter only for filtering the particulate, unless this is excluded when the temperature has excessive values (in the order of 150°C - 180°C), which allow the evaporation of the volatile organic substances collected by the filter 10.

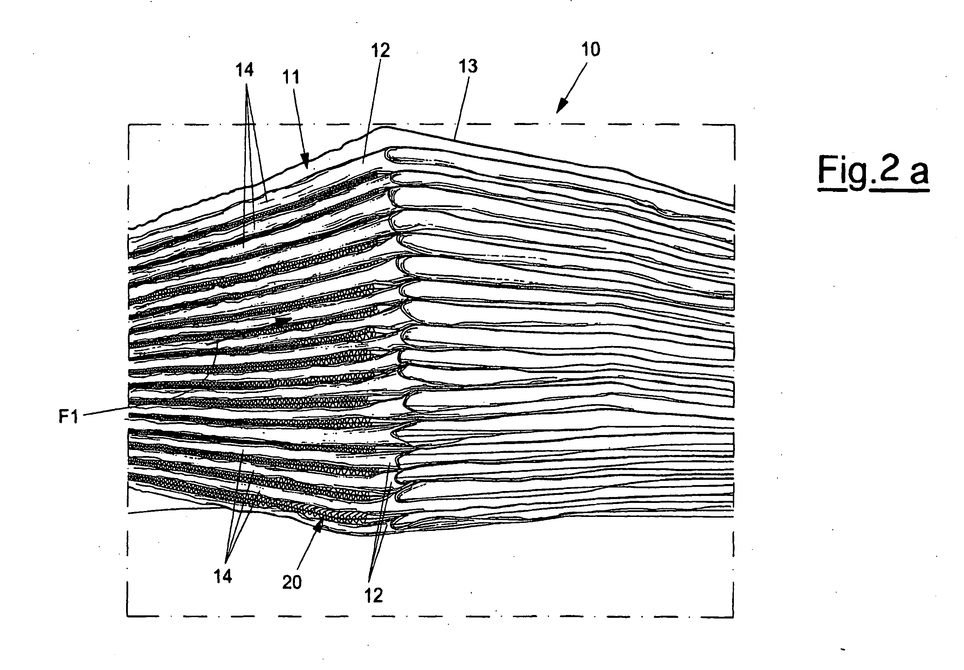

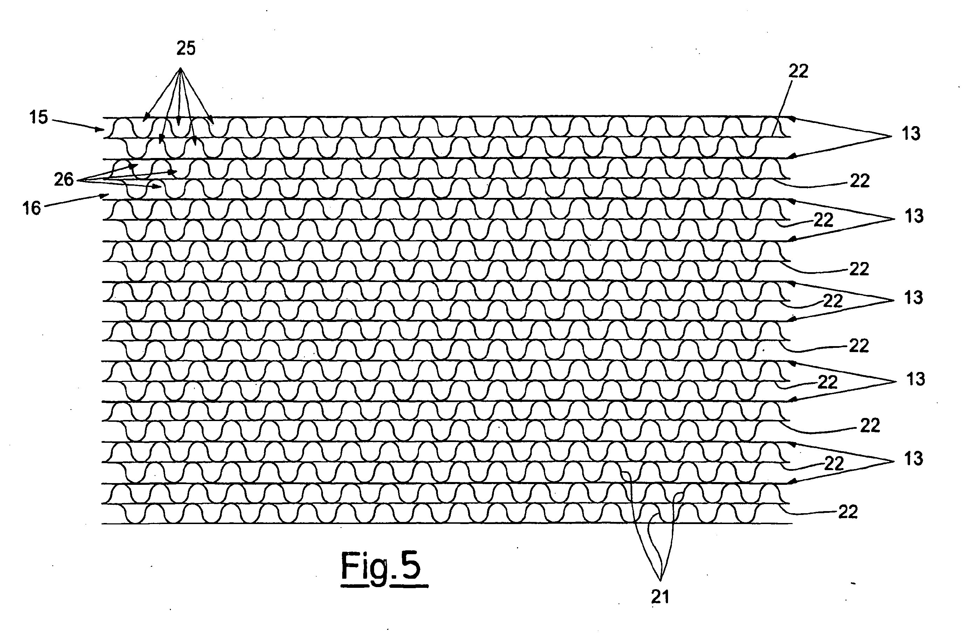

With reference to figures 2a to 6, these illustrate the paper filter 10 suitable for filtering the particulate and volatile substances present in the exhaust gases.

The filter 10 comprises a filtering element 11 produced by a suitable microporous paper folded in the form of a "Greek key", i.e. having several layers 13, arranged substantially parallel, connected through folds 14 of the same filtering paper.

On the basis of research and experimentations, the Applicant has verified that the microporous paper normally used for air filters in internal combustion engines, in a particular embodiment, represents an extremely efficient filtering system for exhaust gases of Diesel cycle engines.

Furthermore, when paper with a filtering efficiency of over 99% is used for particles of around 1 micron, and a specific area expressed as a suitable function of the engine power (m²/Kw), it can be noted that the filter can treat very high volumes of gas, before showing significant pressure drops.

This is due to the filtering capacity of the particulate which is deposited on the paper, which, in turn, acts as a filter, preventing the finest particles from obstructing the paper micropores.

Contrary to a prejudice strongly accepted and amply mentioned in literature, the Applicant has observed that it is possible to produce microporous paper suitable for tolerating, without any problem, temperatures of about 150°C, and over.

The layers 13 are separated by interposing a spacer 20 consisting of corrugated or pleated paper having a stiffness which is such as to prevent the layers 13 from collapsing.

In this way, a large surface of filtering paper is available in a limited space, thus producing a filter having a high volume surface.

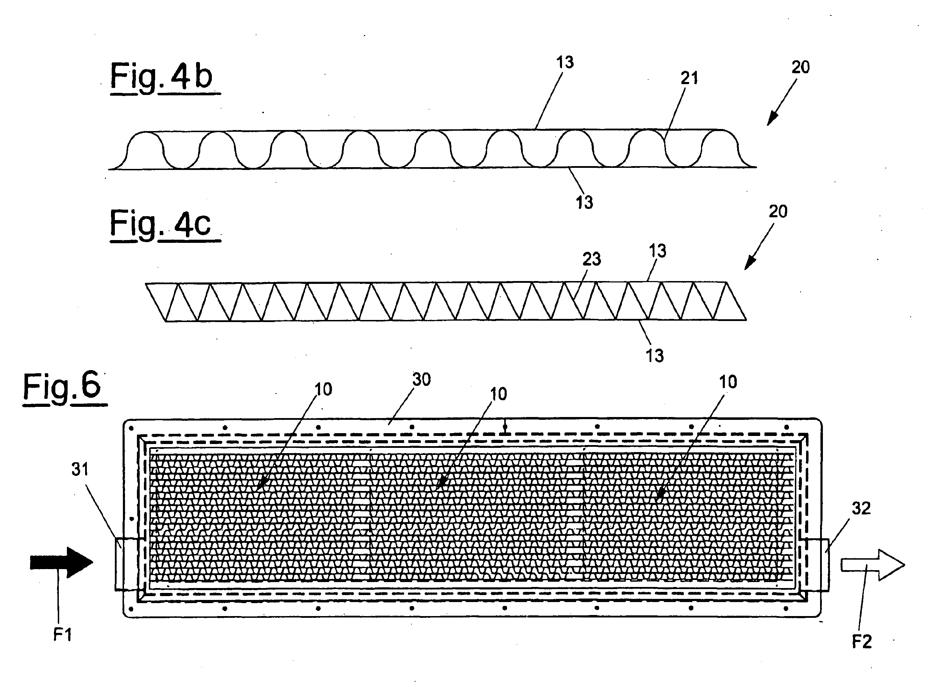

With particular reference to figure 4b, this spacer 20 is produced, for example, by means of corrugated paper 21.

In order to confer higher resistance and allow the automated production of the filter, it is preferable to use corrugated paper 21, glued along the generatrix to a supporting sheet of flat paper or covers 22, available in normal production; this set is hereinafter referred to as "corrugated paper with a cover".

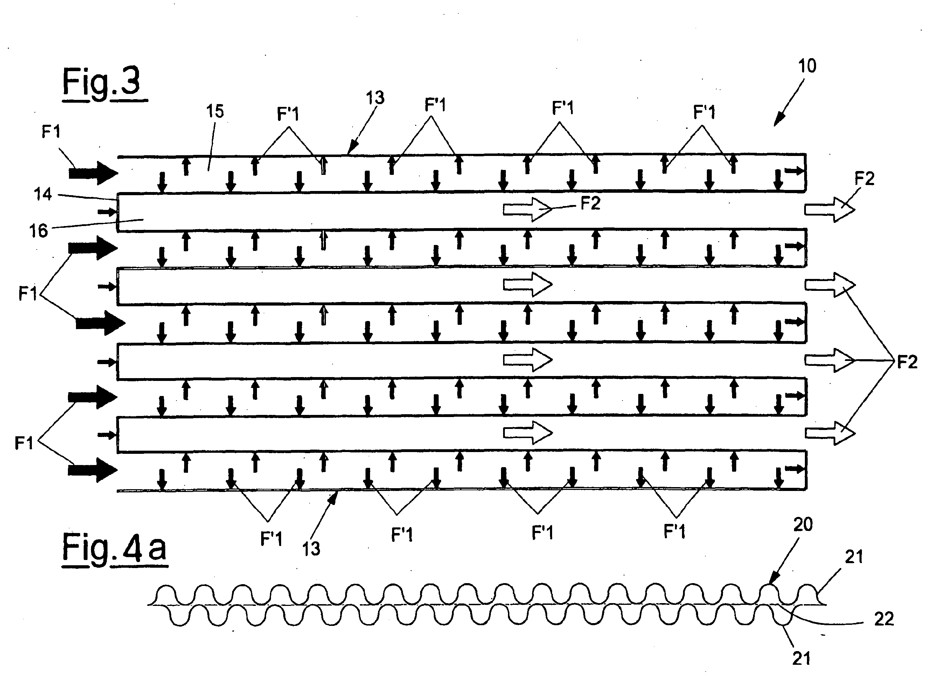

In order to produce the spacer 20, this corrugated paper with a cover is arranged, as illustrated in figure 4a, with two of these sheets of corrugated paper with a cover by joining the covers 22 to each other to form a spacer 20 having the desired thickness and consistency, with corrugated surfaces both above and below.

The spacer 20 can be advantageously produced as described above, or as shown in figure 4c, using pleated paper 23.

The purpose of this spacer 20 is to prevent the layers 13 from collapsing, as the spacer 20, by operating under compression, sustains the above-mentioned layers 13 of filtering paper, keeping them substantially at the same distance, thus guaranteeing a uniform filtration.

The essential condition for its functioning is, in fact, that the single layers 13 of the filtering element remain in position, i.e. parallel and at the same distance.

In the absence of spacers 20, with an increase in the filter obstruction and therefore in the pressure drop that the gas undergoes during its passage, the layers 13, between which the filtered gas circulates, would tend to draw closer and, at the moment of contact with each other, the filter would clog and would no longer function.

This spacer 20, in whatever form it is produced, is arranged with the generatrix of waves, or with the folds, parallel to the gas flow defined by the arrows F1 in figures 2a and 3.

This arrangement of the layers 13 and spacers 20 defines an alternating series of "dirty" cells 15 in which the gas to be filtered circulates, which is sent to the filtering paper through ducts 25 delimited by the waves 21 or folds 23 and by the filtering layers 13.

Said cells 15 of gas to be filtered, indicated by the arrows F1, alternate, in the "Greek key" arrangement of the filter, with "clean" cells 16, in which the filtered gas, indicated by the arrows F2, circulates.

The gas is filtered when it passes through these layers 13, according to the direction and the sense marked by the arrows F'1, and, even if to a small extent, also through the front end of the filtering element 11, passing through the folds 14.

The gas enters the cells 16 of the filtered gas and is sent into the atmosphere through ducts 26, in turn delimited by waves 21 or pleatings 23 and by adjacent layers 13.

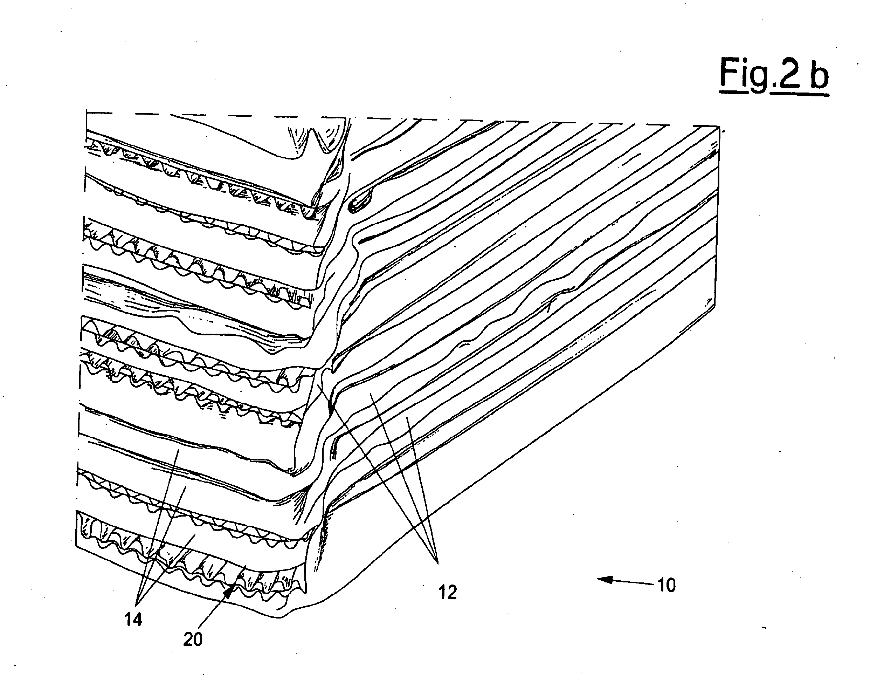

With particular reference to figure 2b, this illustrates the side closing, which is effected by folding the edges 12 obtained thanks to the excess of microporous: filtering paper.

The spacer is in fact kept about 20 mm shorter, on both sides, than the layers 13, the filtering paper is possibly moistened with glue along said edges 12, which are then folded upwards or downwards so as to obtain a shingle lap.

In this way, there is no communication between the cells through which the gas to be filtered flows, which have a higher pressure, and those through which the filtered gas flows, at a lower pressure.

As illustrated in figure 6, the filter 10, according to the preferred embodiment, is housed individually or in several replaceable elements, inside a container 30, which is easy to assemble on a vehicle.

Said container 30 has an inlet duct 31 oriented according to the second branch 2' of the conveying duct 2, and the outlet duct 32, oriented towards the direction F2 of the filtered gas to be released into the atmosphere.

Particular care should be taken that the condensate which is formed upon ignition, particularly during the winter, does not reach the filtering paper; for this purpose, a suitable by-pass can be positioned upstream of the inlet duct 31, selected, for example, by means of an intercepting valve, automatic or controlled by the driver, or by positioning, at the filter inlet, a suitable condensate separator easily found on the market.

The filter can also be equipped with a sensor which informs the driver that the filter must be shortly substituted.

The filtering device according to the invention achieves the desired objectives, in particular:
- a device suitable for retaining both particulate and volatile substances;
- a paper-based filter, having extremely reduced dimensions but which can be used for a relatively long period before being substituted;
- the device causes extremely limited counter-pressures at the engine exhaust;
- the device has dimensions suitable for allowing application both on commercial vehicles and cars;
- substitution interval which can be prolonged thanks to the possibility of excluding the filter under particular conditions, for example when the vehicle is running in extra-urban areas;
- possibility of disposing of the used filter and its particulate content without any problems, for example by incineration, thanks to the use of materials mainly based on cellulose;
- reduced costs of both the complete device, its components such as the replaceable filtering element and its container.

## Claims

1. A filtering device (1) for the particulate and condensable volatile organic substances present in the emission gas of internal combustion engines, suitable for receiving gas from the exhaust of a motor vehicle through a conveying duct (2); comprising a filter (10) connected to the conveying duct (2), the device (1) it includes a heat exchanger (3) positioned and connected so as to receive the emission gas from the conveying duct (2) and send it to the filter (10), a control valve (4), for regulating the temperature of the emission gas entering the filter, by deviating an aliquot of the flow of emission gas coming from the vehicle exhaust to send it to the heat exchanger (3), the said conveying duct (2) branches out into a first branch (2') connected to the filter (10) and into a second branch (2") connected to the exchanger (3), the latter being equipped at its outlet with a cooled gas duct (8) directly connected to the first branch (2') to allow the cooled gases to enter the main flow destined for the filter (10), and a control device (5) of said control valve (4) is provided equipped with a temperature sensor (6) inserted in the first branch (2') close to the inlet (31) of the filter (10), the device is **characterised in that** the control device (5) is capable of maintaining the temperature of the emission gas at the filter (10) inlet within a range of 90°C to 130°C, and **in that** the filter (10) comprises a filtering element (11) produced by microporous paper.

2. The filtering device (1) according to claim 1, wherein said control valve (4) is situated close to the branching area of the branches (2', 2") and is activated by means of a motor (7) and driven by means of said control device (5).

3. The filtering device (1) according to any of the previous claims, wherein a third branch of duct (2"'), suitable for sending the emission gases (F1) of the engine directly downstream of the filter (10), branches off from said duct (2).

4. The filtering device (1) according to claim 3, wherein the interception of the gases (F1) to be discharged without effecting their filtration, is obtained by means of a controlled interception valve (4'), situated close to the branching area of the third duct branch (2"') from the first duct branch (2').

5. The filtering device (1) according to claim 4, wherein said controlled valve (4') is activated by means of a motorization (7') and driven by means of the control device (5) or another control device assigned thereto.

6. The filtering device (1) according to any of the previous claims, wherein said device has at least one pressure sensor (6') connected to the control device (5), and inserted at the inlet of the filter (10), for detecting the counterpressure.

7. The filtering device (1) according to claim 1 wherein said filtering element (11) is made in the form of a folded up sheet having several filtering layers (13) placed substantially parallel, connected by means of folds (14) of the same filtering paper, said layers (13) being separated and maintained equidistant through the interposition of spacers (20) of such a rigidity as to prevent the collapse of the layers (13) said spacers being arranged parallel to the direction of the inlet gas flow (F1) in the filtering element (11) wherein each of said spacers (20) comprises two corrugated boards, each one consisting, in turn, of a sheet of corrugated paper (21) stuck along the generatrix to a corresponding cover (22), the two covers (22) being jointed together by sticking them to form the spacer (20) which therefore presents corrugated surfaces both on its upper and lower side, wherein the disposition of layers (13) and spacers (20)defines an alternated series of "dirty" cells (15) in which the gas to be filtered circulates, which is sent to the filtering paper through ducts (25) delimited by the waves of the corrugated paper (21) and by the filtering layers (13), alternated in the disposition of the filter, with "clean" cells (16), in which the filtered gas (F2) circulates and is sent to the atmosphere through ducts (26), in turn delimited by the waves of the corrugated paper (21) and by adjacent layers (13).

## Patentansprüche

1. Filtervorrichtung (1) für partikuläre und komprimierbare volatile organische Substanzen, welche in dem Abgas von Verbrennungsmotoren vorhanden sind, geeignet um Gas von dem Auspuff eines Kraftfahrzeugs durch einen Beförderungskanal (2) aufzunehmen; umfassend ein Filter (10), welches mit dem Beförderungskanal (2) verbunden ist, wobei die Vorrichtung (1) umfasst einen Wärmetauscher (3), welcher derart angeordnet und verbunden ist, dass er das Abgas von dem Beförderungskanal (2) aufnimmt und es zu dem Filter (10) befördert, ein Steuerventil (4) zur Regelung der Temperatur des Abgases, welches in das Filter einströmt, indem eine Teilmenge des Abgasstromes, welcher von dem Fahrzeugauspuff kommt, derart abgeleitet wird, dass sie zu dem Wärmetauscher (3) befördert wird, den Beförderungskanal (2), welcher in einen ersten Zweig (2'), der mit dem Filter (10) verbunden ist, und in einen zweiten Zweig (2"), der mit dem Wärmetauscher (3) verbunden ist, verzweigt, wobei der letztgenannte an seinem Auslass mit einem gekühlten Gaskanal (8) ausgestattet ist, welcher direkt mit dem ersten Zweig (2') verbunden ist, damit ermöglicht wird, dass die gekühlten Gase in den Hauptstrom einströmen, welcher für das Filter (10) bestimmt ist, und eine Steuervorrichtung (5) des Steuerventils (4), welche mit einem Temperatursensor (6) ausgestattet ist, welcher in dem ersten Zweig (2') in der Nähe des Einlasses (31) des Filters (10) eingefügt ist, wobei die Vorrichtung **dadurch gekennzeichnet ist, dass** die Steuervorrichtung (5) in der Lage ist, die Temperatur des Abgases bei dem Einlass des Filters (10) in einem Bereich von 90° C bis 130° C zu halten, und dass das Filter (10) ein Filterelement (11) umfasst, welches durch mikroporöses Papier erzeugt ist.

2. Filtervorrichtung (1) nach Anspruch 1, **dadurch gekennzeichnet, dass** das Steuerventil (4) in der Nähe des Verzweigungsbereiches der Zweige (2', 2") angeordnet ist und mittels eines Motors (7) aktiviert und mittels der Steuervorrichtung (5) betrieben wird.

3. Filtervorrichtung (1) nach einem der vorhergehenden Ansprüche, **dadurch gekennzeichnet, dass** ein dritter Zweig des Kanals (2"'), welcher zur Beförderung der Abgase (F1) des Motors direkt stromabwärts des Filters (10) geeignet ist, von dem Kanal (2) abgezweigt.

4. Filtervorrichtung (1) nach Anspruch 3, **dadurch gekennzeichnet, dass** das Auffangen der abzuleitenden Gase (F1) ohne eine Beeinflussung ihrer Filterung mittels eines gesteuerten Stellventils (4') erreicht wird, welches in der Nähe des Verzweigungsbereiches des dritten Kanalzweiges (2"') von dem ersten Kanalzweig (2') angeordnet ist.

5. Filtervorrichtung nach Anspruch 4, **dadurch gekennzeichnet, dass** das gesteuerte Ventil (4') mittels einer Motorisierung (7') aktiviert und mittels der Steuervorrichtung (5) oder einer anderen Steuervorrichtung, welche dazu zugeordnet ist, betrieben wird.

6. Filtervorrichtung (1) nach einem der vorhergehenden Ansprüche, **dadurch gekennzeichnet, dass** die Vorrichtung mindestens einen Drucksensor (6') aufweist, welcher mit der Steuervorrichtung (5) verbunden ist und bei dem Einlass des Filters (10) eingefügt ist, um den Gegendruck zu erfassen.

7. Filtervorrichtung (1) nach Anspruch 1, **dadurch gekennzeichnet, dass** das Filterelement (11) in der Form einer zusammengefalteten Lage ausgebildet ist, welche mehrere Filterschichten (13) aufweist, die im Wesentlichen parallel angeordnet sind und mittels Faltungen (14) desselben Filterpapiers verbunden sind, wobei die Schichten (13) durch das dazwischen Anordnen von Abstandshaltern (20) einer solchen Stabilität getrennt und äquidistant gehalten werden, dass das Zusammenfallen der Schichten (13) verhindert wird, dass die Abstandshalter parallel zu der Richtung des einströmenden Gasstromes (F1) in das Filterelement (11) angeordnet sind, dass jeder der Abstandshalter (20) zwei gewellte Pappen umfasst, welche jeweils wiederum aus einer Lage von gewelltem Papier (21) bestehen, die entlang der Mantellinie einer entsprechenden Umhüllung (22) befestigt ist, wobei die zwei Umhüllungen (22) zusammen verbunden sind, indem sie derart befestigt sind, dass sie den Abstandshalter (20) ausbilden, welcher daher gewellte Oberflächen sowohl auf seiner oberen als auch auf seiner unteren Seite aufweist, dass die Anordnung der Schichten (13) und der Abstandshalter (20) abwechselnd Reihen von "schmutzigen" Zellen (15) definiert, in welchen das zu filternde Gas zirkuliert, welches durch Kanäle (25) zu dem Filterpapier befördert wird, die durch die Wellen des gewellten Papiers (21) und durch die Filterschichten (13) abgegrenzt sind, und welche sich bei der Anordnung des Filters mit "sauberen" Zellen (16) abwechseln, in denen das gefilterte Gas (F2) zirkuliert und durch Kanäle (26) in die Umgebung befördert wird, die wiederum durch die Wellen des gewellten Papiers (21) und durch die benachbarten Schichten (13) abgegrenzt sind.

## Revendications

1. Dispositif de filtration (1) pour les substances organiques volatiles particulaires et condensables présentes dans les gaz d'émission des moteurs à combustion interne, approprié pour recevoir les gaz provenant de l'échappement d'un véhicule à moteur par un conduit de transport (2) ; comprenant un filtre (10) raccordé au conduit de transport (2), le dispositif (1) comprend un échangeur de chaleur (3) positionné et raccordé afin de recevoir les gaz d'émission du conduit de transport (2) et les envoyer vers le filtre (10), une soupape de réglage (4), pour régler la température des gaz d'émission pénétrant dans le filtre, en déviant une aliquote de l'écoulement des gaz d'émission provenant de l'échappement du véhicule pour les envoyer vers l'échangeur de chaleur (3), ledit conduit de transport (2) se ramifie en une première ramification (2') raccordée au filtre (10) et en une seconde ramification (2") raccordée à l'échangeur (3), cette dernière étant équipée au niveau de sa sortie d'un conduit de gaz refroidi (8) directement raccordé à la première ramification (2') pour permettre aux gaz refroidis d'entrer dans l'écoulement principal destiné au filtre (10), et un dispositif de commande (5) de ladite soupape de réglage (4) est prévu en étant équipé d'un capteur de température (6) inséré dans la première ramification (2') à proximité de l'entrée (31) du filtre (10), le dispositif est **caractérisé en ce que** le dispositif de commande (5) est capable de maintenir la température des gaz d'émission au niveau de l'entrée de filtre (10) dans une plage allant de 90°C à 130°C, et **en ce que** le filtre (10) comprend un élément filtrant (11) produit avec un papier microporeux.

2. Dispositif de filtration (1) selon la revendication 1, dans lequel ladite soupape de réglage (4) est positionnée à proximité de la zone de ramification des ramifications (2', 2") et est activée au moyen d'un moteur (7) et entraînée au moyen dudit dispositif de commande (5).

3. Dispositif de filtration (1) selon l'une quelconque des revendications précédentes, dans lequel une troisième ramification du conduit (2"'), appropriée pour envoyer les gaz d'émission (F1) du moteur directement en aval du filtre (10), bifurque dudit conduit (2).

4. Dispositif de filtration (1) selon la revendication 3, dans lequel l'interception des gaz (F1) à décharger sans effectuer leur filtration, est obtenue au moyen d'une soupape d'interception contrôlée (4'), située à proximité de la zone de ramification de la troisième ramification de conduit (2"') à partir de la première ramification de conduit (2').

5. Dispositif de filtration (1) selon la revendication 4, dans lequel ladite soupape contrôlée (4') est activée au moyen d'une motorisation (7') et entraînée au moyen du dispositif de commande (5) ou d'un autre dispositif de commande attribué à celle-ci.

6. Dispositif de filtration (1) selon l'une quelconque des revendications précédentes, dans lequel ledit dispositif a au moins un capteur de pression (6') raccordé au dispositif de commande (5), et inséré à l'entrée du filtre (10), pour détecter la contre-pression.

7. Dispositif de filtration (1) selon la revendication 1, dans lequel ledit élément filtrant (11) est réalisé sous la forme d'une feuille repliée ayant plusieurs couches filtrantes (13) placées sensiblement parallèles, raccordées au moyen des plis (14) du même papier filtrant, lesdites couches (13) étant séparées et maintenues à égale distance par l'interposition d'entretoises (20) ayant une rigidité telle qu'elles empêchent le repliage des couches (13), lesdites entretoises étant espacées parallèlement à la direction de l'écoulement du gaz d'entrée (F1) dans l'élément filtrant (11), dans lequel chacune desdites entretoises (20) comprend deux cartons ondulés, chacun se composant à son tour d'une feuille de papier ondulé (21) collée le long de la génératrice sur un couvercle (22) correspondant, les deux couvercles (22) étant assemblés en les collants pour former l'entretoise (20) qui par conséquent présente des surfaces ondulées à la fois sur ses côtés supérieur et inférieur, dans lequel la disposition des couches (13) et des entretoises (20) définit une série alternée de cellules « sales » (15) dans lesquelles le gaz à filtrer circule, qui est envoyé vers le papier filtrant par des conduits (25) délimités par les ondulations du papier ondulé (21) et par les couches filtrantes (13) alternées dans le dispositif du filtre, avec des cellules « propres » (16), dans lesquelles le gaz filtré (F2) circule et est envoyé à l'atmosphère par des conduits (26), à leur tour délimités par les ondulations du papier ondulé (21) et par les couches (13) adjacentes.
